# EUROPEAN PATENT APPLICATION

(11) **EP 4 411 858 A1**
(43) Date of publication of application: **07.08.2024**
(21) Application number: 23167536.4
(22) Date of filing: 12.04.2023
(51) Int. Cl.: H01M 4/13, H01M 4/133, H01M 4/587, H01M 4/64, H01M 4/134, H01M 4/38, H01M 4/62, H01M 4/02

(54) **LITHIUM-ION BATTERY**

(30) Priority: 03.02.2023 CN 202310053038
(71) Applicant: CALB Group Co., Ltd., Changzhou City, Jiangsu Province (CN)
(72) Inventor: ZHANG, Xin, Changzhou City, Jiangsu Province (CN); QIAO, Zhi, Changzhou City, Jiangsu Province (CN); SHEN, Taotao, Changzhou City, Jiangsu Province (CN)
(74) Representative: Becker, Eberhard

(57) **Abstract**

Disclosed is a lithium-ion battery, which includes a negative electrode sheet, the negative electrode sheet includes a current collector and a negative electrode active material layer arranged on the surface of the current collector, the roughness of the current collector is Ra, and the unit is µm. The negative electrode active material layer contains active material particles, and the particle size whose cumulative distribution of active material particles is 10% is D₁₀, the unit is µm. The current collector and active material particles satisfy: 1≤ D₁₀/Ra≤4. The negative electrode sheet in the lithium-ion battery provided by the present disclosure has excellent structural stability, and therefore the lithium-ion battery of the present disclosure has excellent electrical conductivity and cycle characteristics, and has a longer cycle life.

## Description

### BACKGROUND

### Technical Field

The disclosure belongs to the technical field of batteries, and in particular relates to a lithium-ion battery.

### Description of Related Art

Lithium batteries have been commonly adopted in various portable electronic products and electric vehicles because of they have high working voltage, long cycle life, no memory effect, small self-discharge, environmental friendliness and other advantages. Negative electrode accounts for 10% to 15% of the cost of lithium batteries and serves to store and release energy, and have significant influence on the first efficiency, cycle performance, and rate of lithium batteries.

In existing lithium-ion batteries, the negative electrode sheet thereof mainly adopts a single-layer negative electrode active layer design on both sides of the negative electrode collector. The single-layer negative electrode active layer is a mixture of uniform electrode active material, binder and conductive agent. In order to increase the energy density of the battery, the typical method is to reduce the content of binder (conductive agent) in the negative electrode active coating to increase the content of the active material in the negative electrode active coating. However, after reducing the content of the binder, it is problematic to ensure firm adhesion and conductivity of the active coating. A large amount of active material coating will cause the active material layer to fall off the surface of the current collector easily, and might also aggravate the lithium precipitation on the surface of the negative electrode sheet, which in turn reduces the cycle life of lithium-ion batteries and the endurance of electric vehicles.

### SUMMARY

In order to prolong the cycle life of the lithium-ion battery, the present disclosure provides a lithium-ion battery.

An aspect of the present disclosure provides a lithium-ion battery, which includes a negative electrode sheet, the negative electrode sheet includes a current collector and a negative electrode active material layer arranged on the surface of the current collector, the roughness of the current collector is Ra, and the unit is µm. The negative electrode active material layer contains active material particles, and the particle size whose cumulative distribution of active material particles is 10% is D₁₀, the unit is µm. The current collector and active material particles satisfy: 1≤D₁₀/Ra≤4. The negative electrode sheet in the lithium-ion battery provided by the present disclosure has excellent structural stability, and therefore the lithium-ion battery of the present disclosure has excellent electrical conductivity and cycle characteristics, and has a longer cycle life. The roughness Ra of the current collector is characterized by the size of the depression on the surface of the current collector. In the lithium-ion battery of the present disclosure, the size of the depression of the current collector of the negative electrode sheet and the particle size of the active material satisfy a specific proportional relationship. Therefore, on the negative electrode sheet, the gaps formed by the active material and the depression on the surface of the current collector are able to store enough gas to generate gas channels. In addition, the particle size of the active material matches the size of the depression on the surface of the current collector, so that a composite structure similar to that of a rivet may be formed between the active material layer and the current collector. In this way, it is possible for the active material layer and the current collector to be firmly adhered together. Therefore, even if the binder in the active material coating is reduced to a certain extent, the active material layer will not fall off the surface of the current collector, thereby ensuring the structural stability of the negative electrode sheet.

### DESCRIPTION OF THE EMBODIMENTS

An aspect of the present disclosure provides a lithium-ion battery, which includes a negative electrode sheet, the negative electrode sheet includes a current collector and a negative electrode active material layer arranged on the surface of the current collector, the roughness of the current collector is Ra, and the unit is µm. The negative electrode active material layer contains active material particles, and the particle size whose cumulative distribution of active material particles is 10% is D₁₀, the unit is µm. The current collector and active material particles satisfy: 1≤D₁₀/Ra≤4. A negative electrode sheet is provided. The negative electrode sheet includes a current collector and an active material layer, the roughness of the current collector is 1.5 to 3 µm. The active material layer is arranged on the surface of the current collector, the active material layer contains an active material, and the particle size of the active material satisfies D₁₀= 5 to 10 µm. The negative electrode sheet in the lithium-ion battery provided by the present disclosure has excellent structural stability, and therefore the lithium-ion battery of the present disclosure has excellent electrical conductivity and cycle characteristics, and has a longer cycle life. The roughness Ra on the surface of the current collector is characterized by the size of the depression on the surface of the current collector. In the negative electrode sheet of the lithium-ion battery provided in the present disclosure, the size of the depression of the current collector of the negative electrode sheet and the particle size of the active material satisfy a specific proportional relationship. Therefore, on the negative electrode sheet, the gaps formed by the active material having a specific particle size and the depression with the above-mentioned roughness on the surface of the current collector are able to store enough gas to generate gas channels. In addition, the particle size of the active material matches the size of the depression on the surface of the current collector, so that a composite structure similar to that of a rivet may be formed between the active material layer and the current collector. In this way, it is possible for the active material layer and the current collector to be firmly adhered together. Therefore, even if the binder in the active material coating is reduced to a certain extent, the active material layer will not fall off the surface of the current collector, thereby ensuring the structural stability of the negative electrode sheet.

Preferably, 1.8≦D₁₀/Ra≦3.

Preferably, the roughness Ra of the current collector is 1 to 4 µm, and the particle size D₁₀ of the active material particles is 3 to 8 µm.

Preferably, the roughness Ra of the current collector is 1.5 to 3 µm, and the particle diameter D₁₀ of the active material particles is 4 to 6 µm.

Preferably, in the negative electrode sheet, the negative electrode active material layer further includes a binder, and the ratio of the mass of the binder to the total mass of the negative electrode active material layer is no more than 3.5% in terms of mass percentage. In the negative electrode sheet of the lithium-ion battery provided in the present disclosure, the content of binder in the active material layer is less than the content of binder in similar products currently available on the market. Still, the active material layer in the negative electrode sheet of the present disclosure may still be firmly adhered with the current collector, and the negative electrode sheet has good structural stability. By reducing the content of the binder in the active material layer, it is possible to increase the content of the active material in the active material layer, so that the negative electrode sheet provided by the present disclosure has better electrical conductivity than similar products currently available on the market.

Preferably, in the negative electrode sheet, the ratio of the mass of the active material particles to the total mass of the negative electrode active coating is not less than 95% in terms of mass percentage.

Preferably, the active material includes at least one of graphite, silicon carbon material, and silicon oxide.

Preferably, the areal density ρ of the negative electrode active material layer is 60 to 180 g/m².

Preferably, the areal density ρ of the negative electrode active material layer is 80 to 120 g/m².

Preferably, the negative electrode sheet is prepared through the following steps: S1, preparing an active slurry containing an active material, and adjusting the viscosity of the active slurry to 5000 to 8000 mpa·s to obtain the negative electrode slurry for coating; S2, coating the negative electrode slurry on the surface of the current collector, and drying the negative electrode slurry to form an active material layer to obtain a negative electrode sheet. In the process of preparing the negative electrode sheet of the present disclosure, the viscosity of the adopted negative electrode slurry is relatively high. Therefore, during the coating process, the negative electrode slurry has a good leveling effect on the surface of the current collector and is able to cover the opening of depression on the surface of the current collector without completely filling the inside of the depression. In this way, after the negative electrode slurry is dried, a flat active material layer that is closely combined with the current collector may be formed, and the depression on the surface of the current collector will not be blocked, so that sufficient gas storage space is left between the depression and the active material layer.

Preferably, in S2, the negative electrode slurry is evenly coated on the surface of the current collector at a coating speed of 3 to 6 m/min, and then the negative electrode slurry is dried at 90°C to 113°C. By limiting the coating speed and drying temperature, the negative electrode slurry applied on the current collector may be solidified in time, and thereby further reducing the occurrence of the uncured negative electrode slurry filling the depression on the surface of the current collector. In this way, it helps to ensure that enough gas storage space is left inside the depression to create more gas channels.

To allow those skilled in the art to better understand the present disclosure, the technical solutions in the embodiments of the present disclosure will clearly and thoroughly described. Clearly, the described embodiments are only a part of the present disclosure, rather than all embodiments of the present disclosure.

In the following examples, the test method for the roughness of the electrode sheet involved is a stylus method, and the specific operation is as follows. A diamond stylus with a tip curvature radius of about 2 µm is utilized to slide slowly along the surface of the foil under test. Since the surface of the foil under test is uneven, the diamond stylus will move vertically in the direction perpendicular to the surface of the foil, and the up and down displacement thereof is converted into an electrical signal by the sensor. After amplification and processing operations are performed, the display will display the surface roughness value Rz.

### Example 1

### 1. Preparation of positive electrode sheet:

Positive electrode slurry is prepared according to the following method: the ternary positive electrode active material NCM, conductive agent acetylene black, and binder PVDF were mixed in a vacuum mixer in a mass ratio of ternary positive electrode active material NCM: conductive agent acetylene black: binder PVDF=96.4:1: 3.6. Thereafter, a solvent NMP was added to the mixed slurry, and the mixed slurry was stirred under the action of a vacuum mixer until the mixed slurry is uniform, thereby obtaining the positive electrode slurry of this embodiment.

The positive electrode slurry was evenly coated on both surfaces of the positive electrode current collector aluminum foil, dried at room temperature, and transferred to an oven to continue drying, after being dried in the oven, a semi-finished positive electrode sheet was obtained. Then, the semi-finished positive electrode sheet was cold-pressed and cut to obtain the positive electrode sheet to be assembled.

### 2. Preparation of negative electrode sheet:

Negative electrode slurry is prepared according to the following method: the binder used to prepare the negative electrode slurry includes sodium carboxymethylcellulose (CMC) and styrene-butadiene latex (SBR). Active material particles, conductive agent acetylene black, CMC, and SBR were mixed in a vacuum mixer in a mass ratio of active material particles: conductive agent acetylene black: CMC: SBR=96.4:1:1.2:1.4, in which the adopted active material particles are graphite with a particle size of D₁₀=4 µm. Then, a solvent deionized water was added to the mixture thus obtained, and the mixed slurry was stirred under the action of a vacuum mixer until the mixed slurry was uniform. Thereafter, the slurry viscosity of the above mixed slurry was adjusted to 6500 mpa·s, thereby obtaining the negative electrode slurry of this example.

Copper foil with a roughness Ra of 4 µm was adopted as the negative electrode current collector, and the above negative electrode slurry was uniformly coated on both surfaces of the negative electrode current collector copper foil at a coating speed of 4 m/min. After the coating was completed, the electrode sheet was directly dried in the oven at a drying temperature of 102°C. After drying in the oven, the semi-finished negative electrode sheet was obtained, and then the semi-finished negative electrode sheet was cold-pressed and cut to obtain the negative electrode sheet to be assembled.

### 3. Preparation of electrolyte solution

Ethylene carbonate (EC), ethyl methyl carbonate (EMC) and diethyl carbonate (DEC) were mixed in a volume ratio of EC:EMC:DEC=1:1:1 to obtain an organic solvent, and then fully dried lithium salt LiPF₆ was dissolved in the above organic solvent to prepare the electrolyte solution with a concentration of 1mol/L.

### 4. Selection of separator

In this embodiment, polyethylene film was selected as the separator of lithium-ion battery.

### 5. Assembly of lithium-ion battery

The positive electrode sheet to be assembled, the separator, and the negative electrode sheet to be assembled were stacked in sequence, so that the separator was between the positive electrode sheet and negative electrode sheet to separate them, thereby obtaining a bare cell. The bare cell was arranged in a battery housing, after drying, the electrolyte solution was injected therein, and the lithium-ion battery was obtained through vacuum packaging, standing still, chemical formation, shaping and so on.

### Example 2

In this example, lithium-ion battery was prepared by referring to the method provided in Example 1. The difference between this embodiment and Example 1 is as follows: in the process of preparing the negative electrode sheet, copper foil with a roughness Ra of 2 µm was used as the current collector of the negative electrode sheet, and the adopted active material particles are graphite with a particle size of D₁₀=5 µm. Except for the above difference, the materials and method steps adopted to prepare the lithium-ion battery in this example are consistent with those in Example 1.

### Example 3

In this example, lithium-ion battery was prepared by referring to the method provided in Example 1. The difference between this embodiment and Example 1 is as follows: in the process of preparing the negative electrode sheet, copper foil with a roughness Ra of 1 µm was used as the current collector of the negative electrode sheet, and the adopted active material particles are graphite with a particle size of D₁₀=4 µm. Except for the above difference, the materials and method steps adopted to prepare the lithium-ion battery in this example are consistent with those in Example 1.

### Example 4

In this example, lithium-ion battery was prepared by referring to the method provided in Example 1. The difference between this embodiment and Example 1 is as follows: in the process of preparing the negative electrode sheet, copper foil with a roughness Ra of 2.2 µm was used as the current collector of the negative electrode sheet, and the adopted active material particles are graphite with a particle size of D₁₀=4 µm. Except for the above difference, the materials and method steps adopted to prepare the lithium-ion battery in this example are consistent with those in Example 1.

### Example 5

In this example, lithium-ion battery was prepared by referring to the method provided in Example 1. The difference between this embodiment and Example 1 is as follows: in the process of preparing the negative electrode sheet, copper foil with a roughness Ra of 2 µm was used as the current collector of the negative electrode sheet, and the adopted active material particles are graphite with a particle size of D₁₀=6 µm. Except for the above difference, the materials and method steps adopted to prepare the lithium-ion battery in this example are consistent with those in Example 1.

### Example 6

In this example, lithium-ion battery was prepared by referring to the method provided in Example 1. The difference between this embodiment and Example 1 is as follows: in the process of preparing the negative electrode sheet, copper foil with a roughness Ra of 4.5 µm was used as the current collector of the negative electrode sheet, and the adopted active material particles are graphite with a particle size of D₁₀=9 µm. Except for the above difference, the materials and method steps adopted to prepare the lithium-ion battery in this example are consistent with those in Example 1.

### Example 7

In this example, lithium-ion battery was prepared by referring to the method provided in Example 2. The difference between this embodiment and Example 2 is as follows: in the process of preparing the negative electrode slurry, the viscosity of the mixed slurry obtained by mixing the active material particles, conductive agent acetylene black, CMC, SBR and deionized water was adjusted to 5000 mpa·s, thereby obtaining the negative electrode slurry of this example. Except for the above difference, the materials and method steps adopted to prepare the lithium-ion battery in this example are consistent with those in Example 2.

### Example 8

In this example, lithium-ion battery was prepared by referring to the method provided in Example 2. The difference between this embodiment and Example 2 is as follows: in the process of preparing the negative electrode slurry, the viscosity of the mixed slurry obtained by mixing the active material particles, conductive agent acetylene black, CMC, SBR and deionized water was adjusted to 8000 mpa s, thereby obtaining the negative electrode slurry of this example. Except for the above difference, the materials and method steps adopted to prepare the lithium-ion battery in this example are consistent with those in Example 2.

### Example 9

In this example, lithium-ion battery was prepared by referring to the method provided in Example 2. The difference between this embodiment and Example 2 is as follows: in the process of preparing the negative electrode slurry, the viscosity of the mixed slurry obtained by mixing the active material particles, conductive agent acetylene black, CMC, SBR and deionized water was adjusted to 4000 mpa·s, thereby obtaining the negative electrode slurry of this example. Except for the above difference, the materials and method steps adopted to prepare the lithium-ion battery in this example are consistent with those in Example 2.

### Example 10

In this example, lithium-ion battery was prepared by referring to the method provided in Example 2. The difference between this embodiment and Example 2 is as follows: in the process of preparing the negative electrode slurry, the viscosity of the mixed slurry obtained by mixing the active material particles, conductive agent acetylene black, CMC, SBR and deionized water was adjusted to 9000 mpa·s, thereby obtaining the negative electrode slurry of this example. Except for the above difference, the materials and method steps adopted to prepare the lithium-ion battery in this example are consistent with those in Example 2.

### Example 11

In this example, lithium-ion battery was prepared by referring to the method provided in Example 2. The difference between this embodiment and Example 2 is as follows: during the process of preparing the negative electrode sheet, the coated electrode sheet was directly dried in an oven at a drying temperature of 115°C. Except for the above difference, the materials and method steps adopted to prepare the lithium-ion battery in this example are consistent with those in Example 2.

### Example 12

In this example, lithium-ion battery was prepared by referring to the method provided in Example 2. The difference between this embodiment and Example 2 is as follows: during the process of preparing the negative electrode sheet, the coated electrode sheet was directly dried in an oven at a drying temperature of 85°C. Except for the above difference, the materials and method steps adopted to prepare the lithium-ion battery in this example are consistent with those in Example 2.

### Example 13

In this example, lithium-ion battery was prepared by referring to the method provided in Example 2. The difference between this embodiment and Example 2 is as follows: in the operation of coating the negative electrode slurry on the surface of the negative electrode current collector, the coating speed was 2 m/min. Except for the above difference, the materials and method steps adopted to prepare the lithium-ion battery in this example are consistent with those in Example 2.

### Example 14

In this example, lithium-ion battery was prepared by referring to the method provided in Example 2. The difference between this embodiment and Example 2 is as follows: in the operation of coating the negative electrode slurry on the surface of the negative electrode current collector, the coating speed was 7 m/min. Except for the above difference, the materials and method steps adopted to prepare the lithium-ion battery in this example are consistent with those in Example 2.

### Example 15

In this example, lithium-ion battery was prepared by referring to the method provided in Example 2. The difference between this embodiment and Example 2 is as follows: in the process of preparing the negative electrode slurry, the active material particles, conductive agent acetylene black, CMC, and SBR were added to the vacuum mixer for mixing in a mass ratio of active material particles: conductive agent acetylene black: CMC: SBR=96:1:1.4:1.6. Except for the above difference, the materials and method steps adopted to prepare the lithium-ion battery in this example are consistent with those in Example 2.

### Example 16

In this example, lithium-ion battery was prepared by referring to the method provided in Example 2. The difference between this embodiment and Example 2 is as follows: in the process of preparing the negative electrode slurry, the active material particles, conductive agent acetylene black, CMC, and SBR were added to the vacuum mixer for mixing in a mass ratio of active material particles: conductive agent acetylene black: CMC: SBR=95.5:1:1.6:1.9. Except for the above difference, the materials and method steps adopted to prepare the lithium-ion battery in this example are consistent with those in Example 2.

### Example 17

In this example, lithium-ion battery was prepared by referring to the method provided in Example 2. The difference between this embodiment and Example 2 is as follows: in the process of preparing the negative electrode slurry, the active material particles, conductive agent acetylene black, CMC, and SBR were added to the vacuum mixer for mixing in a mass ratio of active material particles: conductive agent acetylene black: CMC: SBR=95:1:1.8:2.2. Except for the above difference, the materials and method steps adopted to prepare the lithium-ion battery in this example are consistent with those in Example 2.

### Comparative example 1

In this comparative example, lithium-ion battery was prepared by referring to the method provided in Example 1. The difference between this comparative example and Example 1 is as follows: in the process of preparing the negative electrode sheet, copper foil with a roughness Ra of 2 µm was used as the current collector of the negative electrode sheet, and the adopted active material particles were graphite with a particle size of D₁₀=1.6 µm. Except for the above difference, the materials and method steps adopted to prepare lithium-ion battery in this comparative example are consistent with those in Example 1.

### Comparative example 2

In this comparative example, lithium-ion battery was prepared by referring to the method provided in Example 1. The difference between this comparative example and Example 1 is as follows: in the process of preparing the negative electrode sheet, copper foil with a roughness Ra of 0.8 µm was used as the current collector of the negative electrode sheet, and the adopted active material particles were graphite with a particle size of D₁₀=6 µm. Except for the above difference, the materials and method steps adopted to prepare lithium-ion battery in this comparative example are consistent with those in Example 1.

### Comparative example 3

In this comparative example, lithium-ion battery was prepared by referring to the method provided in Example 1. The difference between this comparative example and Example 1 is as follows: in the process of preparing the negative electrode sheet, copper foil with a roughness Ra of 4 µm was used as the current collector of the negative electrode sheet, and the adopted active material particles were graphite with a particle size of D₁₀=3 µm. Except for the above difference, the materials and method steps adopted to prepare lithium-ion battery in this comparative example are consistent with those in Example 1.

### Test example

### 1. Object under test

The negative electrode sheets and lithium-ion batteries prepared in Examples 1-17 and Comparative Examples 1-3 were used as the objects under test of this test example, and related parameters and performance tests were carried out.

The process conditions and product structure of the above objects under test are shown in Table 1.

**Table 1. Process conditions and product structure of objects under test**

| Object under test | Particle size of negative electrod e active material particle (D₁₀/µm) | Roughn ess of negative electrod e current collector (Ra/µm) | D_{10/} Ra | Binder content in negative electrod e active coating (%) | Content of negative electrode active coating active material (%) | Viscosity of negative electrode slurry /mpa.s | Coating speed of negative electrode slurry /m/min | Drying temperature of negative electrode sheet/°C | Single side of negative electrode active material layer (g/cm2) |
|---|---|---|---|---|---|---|---|---|---|
| Example 1 | 4 | 4 | 1 | 2.6 | 96.4 | 6500 | 4 | 102 | 120 |
| Example 2 | 5 | 2 | 2.5 | 2.6 | 96.4 | 6500 | 4 | 102 | 120 |
| Example 3 | 4 | 1 | 4 | 2.6 | 96.4 | 6500 | 4 | 102 | 120 |
| Example 4 | 4 | 2.2 | 1.8 | 2.6 | 96.4 | 6500 | 4 | 102 | 120 |
| Example 5 | 6 | 2 | 3 | 2.6 | 96.4 | 6500 | 4 | 102 | 120 |
| Example 6 | 9 | 4.5 | 2 | 2.6 | 96.4 | 6500 | 4 | 102 | 120 |
| Example 7 | 5 | 2 | 2.5 | 2.6 | 96.4 | 5000 | 4 | 102 | 120 |
| Example 8 | 5 | 2 | 2.5 | 2.6 | 96.4 | 8000 | 4 | 102 | 120 |
| Example 9 | 5 | 2 | 2.5 | 2.6 | 96.4 | 4000 | 4 | 102 | 120 |
| Example 10 | 5 | 2 | 2.5 | 2.6 | 96.4 | 9000 | 4 | 102 | 120 |
| Example 11 | 5 | 2 | 2.5 | 2.6 | 96.4 | 6500 | 4 | 115 | 120 |
| Example 12 | 5 | 2 | 2.5 | 2.6 | 96.4 | 6500 | 4 | 85 | 120 |
| Example 13 | 5 | 2 | 2.5 | 2.6 | 96.4 | 6500 | 2 | 102 | 120 |
| Example 14 | 5 | 2 | 2.5 | 2.6 | 96.4 | 6500 | 7 | 102 | 120 |
| Example 15 | 5 | 2 | 2.5 | 3 | 96 | 6500 | 4 | 102 | 120 |
| Example 16 | 5 | 2 | 2.5 | 3.5 | 95.5 | 6500 | 4 | 102 | 120 |
| Example 17 | 5 | 2 | 2.5 | 4 | 95 | 6500 | 4 | 102 | 120 |
| Compara tive example 1 | 1.6 | 2 | 0.8 | 2.6 | 96.4 | 6500 | 4 | 102 | 120 |
| Compara tive example 2 | 6 | 0.8 | 7.5 | 2.6 | 96.4 | 6500 | 4 | 102 | 120 |
| Compara tive example 3 | 3 | 4 | 0.75 | 2.6 | 96.4 | 6500 | 4 | 102 | 120 |

### 2. Test items

### (1) Cycle performance test

At 25°C, the prepared lithium-ion battery was charged at a rate of 1C and discharged at a rate of 1C, and a full charge and discharge cycle test was performed. There were 1000 cycles, and the capacity retention rate was recorded.

### (2) Dynamic performance test (DCR test)

Equipment: Neware charging and discharging machine

### Test Method:

1) In a constant temperature box with a temperature of 25°C, when heat balance was achieved, a pouch battery was discharged at a rate of 1C/1C to the end-of-discharge voltage specified in the technical document, and kept still for no less than 10 minutes. Then the pouch battery was charged at a constant current of 1C/1C to the end-of-charge voltage, and then switched to constant-voltage charging. Charging was stopped when the end-of-charging current dropped to 0.05 C, and kept still for no less than 10 minutes after charging.
2) The load was adjusted to 50% SOC, kept still for 2 hours, and the open circuit voltage V₀ was recorded.
3) Discharging was performed with 1C/1C current ID for 18s, the sampling interval was 0.1s, and the voltage V_{18D} at 18s was recorded.
4) Kept still for 40s, the sampling interval was 0.1s, and the voltage V₁ was recorded.
5) Charging was performed with 1C/1C current Ic for 10s, the sampling interval was 0.1s, the voltage V_{10C} at 10s was recorded, and kept still for 10 min.

Calculation formula: discharge internal resistance (mΩ) at 18s = (V₀-V_{18D})/ID×1000.

### (3) Peeling force test of active coating

A standard steel plate (50mm×125mm) was taken as the rigidity test bottom plate, and the surface of the steel plate was wiped with dust-free paper dipped in alcohol. A side of 3M double-sided adhesive (50mm×125mm) was attached on the steel plate to ensure that the adhesion is smooth and wrinkle-free. The negative electrode sheet whose single side is provided with the active coating was cut into a sample to be tested (50mmx200mm). The electrode sheet to be tested was attached on the other surface of the double-sided adhesive, and it is ensured that the contact is smooth and wrinkle-free during the pasting process. After roll-pressing with a pressure roller, a tensile jaw of a universal testing machine was adopted to clamp the steel plate at one end and the electrode sheet at the other end, and the pulling test was performed at a speed of 300mm/min. When the curve in the software chart of the tensile recording software was flat and the displacement was greater than 80mm, the machine stopped, and the average tensile value of the flat part of the reading curve is the peeling force.

### 3. Test results

The test results are shown in Table 2.

**Table 2. Product performance results of objects under test**

| Group | Peeling force F/m | Cycle performance / 1000cls | DCR/Ω |
|---|---|---|---|
| Example 1 | 12.8 | 89.54% | 30.7 |
| Example 2 | 15 | 92.12% | 26.4 |
| Example 3 | 13.4 | 88.64% | 28.9 |
| Example 4 | 13 | 91.8% | 26.1 |
| Example 5 | 15.5 | 92.8% | 27.8 |
| Example 6 | 13.2 | 89.2% | 28.3 |
| Example 7 | 14.8 | 91.2% | 31.3 |
| Example 8 | 15.3 | 92.4% | 28.5 |
| Example 9 | 14.5 | 89.7% | 32.3 |
| Example 10 | 15.5 | 90.2% | 30.5 |
| Example 11 | 14.6 | 89.6% | 31.5 |
| Example 12 | 15.4 | 89.6% | 25.6 |
| Example 13 | 14.1 | 88.1% | 28.4 |
| Example 14 | 13.1 | 88.6% | 29.5 |
| Example 15 | 16.4 | 91.8% | 27.2 |
| Example 16 | 17 | 91.2% | 28.8 |
| Example 17 | 17.6 | 89.8% | 30.3 |
| Comparative example 1 | 12.4 | 87.3% | 32.5 |
| Comparative example 2 | 11.9 | 86.28% | 32.7 |
| Comparative example 3 | 13.1 | 87.0% | 33.1 |

The negative electrode sheets prepared in Examples 1-14 all have the product structure of D₁₀/Ra=1 to 4, and the lithium-ion batteries prepared by using these negative electrode sheets respectively have good cycle performance and maintain low DC resistance level (DCR) value. However, the negative electrode sheets prepared in Comparative Examples 1 to 3 do not have the product structure of D₁₀/Ra=1 to 4. As compared with Examples 1 to 16, the peeling force (the peeling force between the current collector and the active material layer) corresponding to the negative electrode sheets prepared in Comparative Examples 1 to 3 is relatively low, and the lithium-ion battery prepared by using these negative electrode sheets has poor cycle performance and high DC resistance level (DCR value). It is shown that the use of the negative electrode sheet with the product structure characterized in D₁₀/Ra=1 to 4 allows the lithium-ion battery to have excellent electrical conductivity and cycle characteristics simultaneously.

The roughness Ra on the surface of the current collector is characterized by the size of the depression on the surface of the current collector. The negative electrode sheets prepared in Examples 1 to 14 all satisfy D₁₀/Ra=1 to 4. Therefore, on the negative electrode sheet, the gap formed by the active material and the depression on the surface of current collector is able to store enough gas to generate gas channels. In addition, the particle size of the active material matches the size of the depression on the surface of the current collector, so that a composite structure similar to that of a rivet may be formed between the active material layer and the current collector. In this way, it is possible for the active material layer and the current collector to be firmly adhered together. Therefore, even if the binder in the active material coating is reduced to a certain extent, the active material layer will not fall off the surface of the current collector, thereby ensuring the structural stability of the negative electrode sheet.

The difference between Examples 1-6 and Comparative Examples 1-3 lies in the use of active materials with different particle sizes D₁₀ and current collectors with different roughnesses Ra in the process of preparing negative electrodes, so that D₁₀/Ra is set as variables for comparison. To make comparisons clear, the variable settings and product performance test results of Examples 1-6 and Comparative Examples 1-3 are shown in Table 3.

In Examples 1 to 6, the cycle characteristics of Examples 2, 4, and 5 are better and the DCR value is low, which shows that when the negative electrode sheet satisfies 1.8≤D₁₀/Ra≤3, the electrical conductivity and cycle characteristics of lithium-ion battery may be further improved. Although the D₁₀/Ra of the negative electrode sheet of Example 6 also falls within the above-mentioned preferred range, in particular, the D₁₀/Ra of the negative electrode sheet of Example 6 is close to the D₁₀/Ra of the negative electrode sheet of Example 4, in the data comparison of the test result of the two, the data corresponding to the lithium-ion battery of Example 4 is preferable, and the reason is that the Ra value range of the current collector of the negative electrode sheet of Example 4 falls within the range of 1 to 4 µm, and the particle size D₁₀ of the active material particles used in the negative electrode falls within the range of 3 to 8 µm. For negative electrode sheet satisfying the above characteristics, the active particles thereof not only have an excellent matching effect with the current collector, but also ensure that the active particles are well filled in the active coating.

**Table 3. Variable settings and product performance test results of Examples 1 to 6 and Comparative Examples 1 to 3**

| Object under test | Particle size of negative electrode active material (D₁₀/µm) | Roughness of negative electrode current collector (Ra/µm) | D₁₀/Ra | Peeling force (F/m) | Cycle performance /1000cls | DCR/Ω |
|---|---|---|---|---|---|---|
| Example 1 | 4 | 4 | 1 | 12.8 | 89.54% | 30.7 |
| Example 2 | 5 | 2 | 2.5 | 15 | 92.12% | 26.4 |
| Example 3 | 4 | 1 | 4 | 13.4 | 88.64% | 28.9 |
| Example 4 | 4 | 2.2 | 1.8 | 13 | 91.8% | 26.1 |
| Example 5 | 6 | 2 | 3 | 15.5 | 92.8% | 27.8 |
| Example 6 | 9 | 4.5 | 2 | 13.2 | 89.2% | 28.3 |
| Comparative example 1 | 1.6 | 2 | 0.8 | 12.4 | 87.3% | 32.89 |
| Comparative example 2 | 6 | 0.8 | 7.5 | 11.9 | 86.28% | 31.23 |
| Comparative example 3 | 3 | 4 | 0.75 | 13.1 | 87.0% | 32.94 |

The difference between Examples 2 and 7-10 is that the negative electrode slurry is adjusted to have different viscosities during the preparation of the negative electrode slurry, and the viscosity of the negative electrode slurry is used as a variable setting for comparison. To make comparisons clear, the variable settings and product performance test results of Examples 2 and 7-10 are shown in Table 4.

It is shown in the performance test results of lithium-ion battery provided in Examples 2, 7-10 that the cycle performance corresponding to Examples 2, 7, and 8 is better and the DCR value is lower. In these examples, the coating viscosity of the active slurry involved is between 5000 and 8000 mpa·s, which fall within the high viscosity range. Therefore, during the coating process, the active slurry has a good leveling effect on the surface of the current collector and is able to cover the opening of depression on the surface of the current collector without completely filling the inside of the depression. In this way, after the negative electrode slurry is dried, a flat active material layer that is closely combined with the current collector may be formed, and the depression on the surface of the current collector will not be blocked, so that sufficient gas storage space is left between the depression and the active material layer, thereby ensuring that the lithium-ion battery using the thus prepared negative electrode sheet has excellent cycle performance and electrical conductivity. In comparison, the viscosity of the active slurry used to make the negative electrode in Example 9 is relatively low. During the coating process, the active slurry tends to block the depressions on the surface of the current collector, reducing the number of gas channels. On the other hand, the viscosity of the active slurry used to make the negative electrode in Example 10 is too high, and the leveling effect of the active slurry in the coating process is not good. Both the uniformity and smoothness of the active coating thus obtained are insufficient.

**Table 4. Variable settings and product performance test results of Examples 2 and 7 to 10**

| Object under test | Viscosity of negative electrode slurry/mpa.s | Peeling force (F/m) | Cycle performance /1000cls | DCR/Ω |
|---|---|---|---|---|
| Example 2 | 6500 | 15 | 92.12% | 26.4 |
| Example 7 | 5000 | 14.8 | 91.2% | 31.3 |
| Example 8 | 8000 | 15.3 | 92.4% | 28.5 |
| Example 9 | 4000 | 14.5 | 89.7% | 32.3 |
| Example 10 | 9000 | 15.5 | 90.2% | 30.5 |

There is no difference in the materials used to prepare the lithium-ion battery in Examples 2 and 11-14, and the difference lies in the coating speed of the negative electrode slurry and the drying temperature of the negative electrode sheet. To make comparisons clear, the variable settings and product performance test results of Examples 2 and 11 to 14 are shown in Table 5.

Among Examples 2 and 11-14, the overall performance of the lithium-ion battery provided in Example 2 is optimal. Compared with Example 2: in Example 11, the drying temperature during the preparation of the negative electrode sheet was too high, and therefore the surface density of the active coating of the negative electrode sheet was too high, resulting in the deterioration of the overall performance of the lithium-ion battery using the negative electrode sheet thus obtained. In comparison, in Example 13, the drying temperature during the preparation of the negative electrode sheet was too low, and the drying efficiency was bad, which resulted in residual moisture in the active coating of the negative electrode sheet prepared in Example 12, and therefore the energy density of the lithium-ion battery using the negative electrode sheet thus obtained was reduced. In addition, also compared with Example 2: in Example 13, the coating speed in the process of preparing the negative electrode sheet was relatively low, the electrode sheet was retained in the oven for too long, and the electrode sheet had local cracking, curling, and even the active coating peeled off. In Example 14, the coating speed in the process of preparing the negative electrode sheet was too fast, and the moisture in the active coating of the negative electrode sheet was not sufficiently dried, which reduced the energy density of the lithium-ion battery using the negative electrode sheet thus obtained.

**Table 5. Variable settings and product performance test results of Examples 2 and 11 to 14**

| Object under test | Coating speed of negative electrode slurry/m/min | Drying temperature for negative electrode sheet/°C | Peeling force (F/m) | Cycle performance /1000cls | DCR/Ω |
|---|---|---|---|---|---|
| Example 2 | 4 | 102 | 15 | 92.12% | 26.4 |
| Example 11 | 4 | 115 | 14.6 | 89.6% | 31.5 |
| Example 12 | 4 | 85 | 15.4 | 89.6% | 25.6 |
| Example 13 | 2 | 102 | 14.1 | 88.1% | 28.4 |
| Example 14 | 7 | 102 | 13.1 | 88.6% | 29.5 |

The difference between Examples 2 and 15-17 lies in the content of the active material particles and the content of the binder used to prepare the negative electrode slurry. To make comparisons clear, the variable settings and product performance test results of Examples 2 and 15-17 are shown in Table 6. The negative electrode sheets prepared in Example 2, 15-17 all have good structural stability, and the active material layer and the current collector of the negative electrode sheet may be firmly composited. In Examples 15-17, the content of binder in the preparation of the negative electrode slurry is more compared with that of Example 2, and it is reflected that the peeling force measured for the negative electrode sheet is higher. However, due to the decrease in the content of the negative electrode active material particles, the energy density of the negative electrode sheet is reduced, thus compromising the cycle characteristics and electrical conductivity characteristics of the lithium-ion battery using such negative electrode sheet.

**Table 6. Variable settings and product performance test results of Examples 2 and 15 to 17**

| Object under test | Content of binder in negative electrode active coating (%) | Content of active material in negative electrode active coating (%) | Peeling force (F/m) | Cycle performance /1000cls | DCR/Ω |
|---|---|---|---|---|---|
| Example 2 | 2.6 | 96.4 | 15 | 92.12% | 26.4 |
| Example 15 | 3 | 96 | 16.4 | 91.8% | 27.2 |
| Example 16 | 3.5 | 95.5 | 17 | 91.2% | 28.8 |
| Example 17 | 4 | 95 | 17.6 | 89.8% | 30.3 |

## Claims

1. A lithium-ion battery, comprising: a negative electrode sheet, wherein the negative electrode sheet comprises a current collector and a negative electrode active material layer arranged on a surface of the current collector, a roughness of the current collector is Ra, and a unit is µm; the negative electrode active material layer contains active material particles, and a particle size whose cumulative distribution of the active material particles is 10% is D₁₀, a unit is µm, and wherein the current collector and the active material particles satisfy: 1≤D₁₀/Ra≤4.

2. The lithium-ion battery according to claim 1, wherein 1.8≦D₁₀/Ra≦3.

3. The lithium-ion battery according to claim 1, wherein the roughness Ra of the current collector is 1 µm to 4 µm, and the particle size D₁₀ of the active material particles is 3 µm to 8 µm.

4. The lithium-ion battery according to claim 3, wherein the roughness Ra of the current collector is 1.5 µm to 3 µm, and the particle diameter D₁₀ of the active material particles is 4 µm to 6 µm.

5. The lithium-ion battery according to claim 1, wherein in the negative electrode sheet, the negative electrode active material layer further comprises a binder, and a ratio of a mass of the binder to a total mass of the negative electrode active material layer is no more than 3.5% in terms of mass percentage.

6. The lithium-ion battery according to claim 5, wherein in the negative electrode sheet, a ratio of a mass of the active material particles to a total mass of a negative electrode active coating is not less than 95% in terms of mass percentage.

7. The lithium-ion battery according to claim 6, wherein an active material comprises at least one of graphite, silicon carbon material, and silicon oxide.

8. The lithium-ion battery according to claim 1, wherein an areal density ρ of a single surface of the negative electrode active material layer is 60 to 180 g/m².

9. The lithium-ion battery according to claim 8, wherein the areal density ρ of the single surface of the negative electrode active material layer is 80 to 120 g/m².

10. The lithium-ion battery according to claim 1, wherein the negative electrode sheet is prepared as follows:
S1, preparing an active slurry containing an active material, and adjusting a viscosity of the active slurry to 5000 to 8000 mpa·s to obtain a negative electrode slurry for coating;
S2, coating the negative electrode slurry on the surface of the current collector, and drying the negative electrode slurry to form the negative electrode active material layer to obtain the negative electrode sheet.

11. The lithium-ion battery according to claim 10, wherein in the S2, the negative electrode slurry is evenly coated on the surface of the current collector at a coating speed of 3 to 6 m/min, and then the negative electrode slurry is dried at 90°C to 113°C.
